# EUROPÄISCHE PATENTSCHRIFT

(11) **EP 0 531 464 B1**
(45) Veröffentlichungstag und Bekanntmachung des Hinweises auf die Patenterteilung: **28.02.1996**
(21) Anmeldenummer: 92901752.3
(22) Anmeldetag: 31.12.1991
(51) Int. Cl.: C09K 5/06

(54) **SPEICHERSALZ-MISCHUNGEN**
STORAGE SALT MIXTURES
MELANGES DE SELS POUR LE STOCKAGE

(30) Priorität: 31.12.1990 DE 4042268
(43) Veröffentlichungstag der Anmeldung: 17.03.1993
(73) Patentinhaber: Hörmansdörfer, Gerd, D-31303 Burgdorf (DE)
(72) Erfinder: Hörmansdörfer, Gerd, D-31303 Burgdorf (DE)
(74) Vertreter: Eikenberg, Kurt-Rudolf
(86) Internationale Anmeldenummer: DE9101014
(87) Internationale Veröffentlichungsnummer: WO9212217

(56) Entgegenhaltungen:
- GB-A- 1 596 883
- US-A- 4 057 101
- US-A- 4 189 393

## Beschreibung

Die Erfindung betrifft Latentwärmespeichermittel, welche aus Mischungen zwischen Perchloraten bzw. Perchlorat-Hydraten und anderen anorganischen Salzen bzw. Salzhydraten oder organischen Substanzen bestehen, bzw. Latentwärmespeicher mit einer Füllung aus derartigen Mischungen.

Es ist bekannt, daß eine Substanz beim Erhitzen während des Übergangs vom festen in den flüssigen Zustand eine bestimmte Energiemenge aufnimmt. Entsprechende Aufheizkurven weisen daher nach einem anfänglichen Temperaturanstieg ein Temperaturplateau in Höhe der Schmelztemperatur auf, ehe nach dem vollständigen Aufschmelzen der Substanz eine weitere Temperaturerhöhung erfolgt. Bei vielen Substanzen ist dieser Vorgang reversibel. Während des Abkühlens verharrt daher die Substanz über eine entsprechende Zeitspanne auf der Erstarrungstemperatur, wobei die beim Schmelzen zuvor aufgenommene Energie wieder abgegeben wird. Aufgrund der Tatsache, daß diese Schmelzenergie etwa das ein- bis zweihundertfache der spezifischen Wärme der Substanz betragen kann, ergibt sich die Möglichkeit, so eine größere Energiemenge in einem engen Temperaturbereich bei relativ kleinem Volumenbedarf zu speichern.

Substanzen zur Speicherung von Energie unter Ausnutzung des Phasenübergangs fest/flüssig und umgekehrt werden als Latentwärmespeichermittel, bzw. auf englisch Phase Change Materials (PCM) bezeichnet. Sie sollten generell eine möglichst hohe Schmelzenthalpie aufweisen, wobei es in der Regel auf die volumenspezifische (also auf das Volumen bezogene) Schmelzenthalpie ankommt, um pro Volumeneinheit des zur Verfügung stehenden Speicherraums ein Höchstmaß an Speicherkapazität zu schaffen. Daneben müssen derartige Latentwärmespeichermittel zyklenfest sein, d.h. der Phasenübergang fest-flüssig-fest muß über lange Zeiträume hinweg reversibel reproduzierbar bleiben und darf nicht durch chemische Umsetzungen, Entmischungen, Abspaltung von Kristallwasser oder dergleichen Vorgänge beeinträchtigt werden. Weitere wichtige Kriterien können noch das Erstarrungsverhalten (z.B. die Bildung einer metastabilen Schmelze, das Ausmaß einer Volumenänderung beim Phasenübergang oder die Kristallisationsform) sein, ferner die Verträglichkeit mit den Konstruktionswerkstoffen, die physiologische Unbedenklichkeit und die Verfügbarkeit zu einem akzeptablen Preis. Es hat sich bislang als schwierig erwiesen, Latentwärmespeichermittel zu finden, bei denen die Gesamtheit dieser Kriterien in einer für den jeweiligen Anwendungsfall optimalen Weise erfüllt ist.

Viele der bisher bekannten Latentwärmespeichermittel sind zum Einsatz im Bereich der Raumheizung (z.B. in Verbindung mit Solarkollektoren oder auch Wärmepumpen) entwickelt worden und besitzen dementsprechend Schmelzpunkte im Brauchwasserbereich. Neben anorganischen Substanzen, wie Salzhydraten und Salzmischungen sind für derartige Anwendungen auch organische Substanzen vorgeschlagen worden.

Ähnliche Einsatzgebiete für Latentwärmespeichermittel bestehen in industriellen Prozessen, wenn anderweitig nutzbare Abwärme gespeichert werden soll, oder Wärmereserven für die Deckung von Lastspitzen bereit gehalten werden müssen.

Spezielle Anwendungsfälle für Latentwärmespeichermittel bestehen ferner in Vorwärmgeräten für Kraftfahrzeuge, in thermischen Kontrolleinrichtungen in Satelliten, in Warmhalteplatten für Speisen, in der Medizintechnik, oder in Hitzeschutzsystemen für Meßelektronik z.B. in industriellen Prozessen oder auch für Bohrlochsonden in der Geophysik.

Für die als Beispiel aufgezählten Anwendungsbereiche besteht nach wie vor ein Bedarf an verbesserten Latentwärmespeichermitteln, welcher einerseits in der Unzulänglichkeit der bisher eingesetzten Substanzen, andererseits in dem Streben nach ständiger Verbesserung begründet ist. Insbesondere durch den Zwang, einen möglichst hohen Energieinhalt in einem vorgegebenen Volumen unterzubringen, besteht die Aufgabe zur Schaffung von Latentwärmespeichermitteln, deren volumenspezifische Speicherkapazität die physikalischen Grenzen erreicht.

Nach bisher gängigen Lehrmeinungen sind sowohl für organische, als auch anorganische Substanzen im Temperaturbereich bis zu etwa 130 °C maximale Energiedichten der Schmelzenthalpie von bis zu ca. 300 J/cm³ zu erwarten (Siehe: Dr.P.Kesselring, Zur Energiedichte im Latentwärmespeicher - einige grundsätzliche Überlegungen, VDI-Berichte Nr.288, 1977). Eigene Untersuchungen des Anmelders ergaben, daß aus rein physikalischen Gründen Maximalwerte der volumenspezifischen Schmelzenthalpie möglich sind, welche bei beliebigen Schmelztemperaturen etwa dem Wert der Schmelztemperatur der Substanz in Grad Kelvin, multipliziert mit dem Faktor 2, entsprechen, so daß z.B. eine Substanz mit der Schmelztemperatur 95 °C (entsprechend ca. 368 °K) im günstigsten Fall eine Schmelzenthalpie von ungefähr 740 J/cm³ besitzen könnte.

Von diesem Maximalwert ist zwar eine in dem US-Patent 4,057,101 vorgeschlagene Substanz, nämlich Lithiumperchlorat-Trihydrat, noch etwas entfernt, liegt jedoch mit ihren kalorischen Werten vergleichsweise recht hoch, und besitzt dabei ein hervorragendes Schmelz- bzw. Erstarrungsverhalten. Sie dürfte unter den Salzhydraten mit großer Wahrscheinlichkeit jene mit den besten Kristallisationseigenschaften sein. Auch ihre Wärmeleitfähigkeit ist ungewöhnlich hoch.

Eigene Untersuchungen in der DSC-Anlage ergaben für die reine Substanz bei einer Schmelztemperatur von 94,3 °C eine Schmelzenthalpie von 306 J/g, eine spezifische Wärme von 1,5 J/g/K im festen, und 1,98 J/g/K im flüssigen Zustand. Mittels der in der Literatur angegebenen Dichte von 1,89 g/cm³ errechnet sich so die volumenspezifische Schmelzenthalpie zu 578 J/cm³, die auf das Volumen bezogene spezifische Wärme zu 2,84 J/cm³/K im festen, und zu 3,74 J/cm³/K im flüssigen Zustand.

Leider liegt der Schmelzpunkt von Lithiumperchlorat-Trihydrat mit 94,2 °C sehr nahe an der Siedetemperatur von Wasser, so daß es in drucklosen Systemen, in welchen z.B. Wasser als Wärmeträger verwendet wird, praktisch nicht einsetzbar ist. Auch für die Verwendung als Wärmespeichermittel innerhalb von Vorwärmgeräten für den Kühl- bzw. Heizwasserkreislauf von Kraftfahrzeugen ist seine Schmelztemperatur zu hoch. Selbst für den in der genannten Patentschrift vorgesehenen Anwendungsfall als Wärmesenke für elektronische Baugruppen wäre in einer Reihe von Fällen eine niedrigere Schmelztemperatur wünschenswert.

Es bestand daher die Aufgabe zur Schaffung von Latentwärmespeichermitteln, welche ähnlich positive Eigenschaften wie Lithiumperchlorat-Trihydrat aufweisen und dabei mit ihren Schmelztemperaturen einen tiefer liegenden Temperaturbereich möglichst breit abdecken sollten.

Die der Erfindung zugrunde liegende Aufgabe wird durch die Mischung bestimmter Perchlorate bzw. Perchlorat-Hydrate mit anderen anorganischen Salzen bzw. Salzhydraten oder organischen Substanzen gelöst.

Dabei wird mit der Erfindung eine ganze Familie von derartigen Mischungen zur Verfügung gestellt, welche einen breiten Schmelztemperaturbereich überdecken und gleichzeitig recht hohe Schmelzenthalpien besitzen. Für diese Mischungen mit mindestens einem Mischungsbestandteil aus der Gruppe der Perchlorate bzw. Perchlorat-Hydrate werden als zusätzliche Bestandteile andere Perchlorate, die Chloride, Bromide, Nitrate und Hydroxide, bzw. jeweils deren Hydrate vorgeschlagen, wobei diese vorzugsweise aus jenen Gruppen ausgewählt sind, welche die Elemente Lithium, Natrium, Kalium, Magnesium, Calcium, Strontium oder Barium enthalten.

Als weitere Familie werden solche Mischungen vorgeschlagen, welche mit mindestens einem Mischungsbestandteil aus einem Perchlorat bzw. Perchlorat-Hydrat und als zusätzlichem Bestandteil mindestens einer zugemischten organischen Substanz bestehen, wobei die zugemischten organischen Substanzen aus jenen Gruppen ausgewählt sind, welche durch Perchlorate nicht oxydierbar sind.

Es wurde gefunden, daß die Perchlorate bzw. Perchlorat-Hydrate untereinander bzw. mit den genannten anderen Substanzen binäre, ternäre und höherwertige Systeme mit eutektischen oder invarianten Schmelzpunkten bilden, welche so je nach Mischung die Auswahl einer Reihe verschiedener Schmelztemperaturen erlauben. Besonders erstaunlich ist, daß einige dieser Mischungen ausgesprochen hohe Schmelzenthalpien besitzen, welche nicht sehr viel niedriger liegen, als z.B. die des reinen Lithiumperchlorat-Trihydrats.

Ein zusätzlicher Vorteil der vorgeschlagenen Mischungen liegt in der Ausbildung eines sehr feinen Gefüges der erstarrten Mischung, wodurch die nachteilige und hinderliche Grobkristallbildung, wie sie von den reinen Substanzen her bekannt ist, zuverlässig unterbunden wird.

Die in den Mischungen enthaltenen Perchlorate sind zwar in Bezug auf die physiologische Bedenklichkeit zum Teil als "reizend" eingestuft, in der Regel auch als gesundheitsschädlich beim Verschlucken, MAK-Werte wurden jedoch nicht festgelegt. Für die vorgesehenen technischen Anwendungen sind die Einstufungen der Perchlorate relativ günstig, weil damit andere Substanzen mit wesentlich höherem Gefahrenpotential unter Umständen ersetzt werden können. Allerdings ist zu beachten, daß vor allem bei der Mischung wasserfreier Perchlorate mit brennbaren Stoffen Explosionsgefahr besteht. Bei der technischen Verwendung sind daher entsprechende konstruktive Vorkehrungen zu treffen, um den Kontakt mit derartigen Stoffen sicher auszuschließen.

Andererseits ist von Vorteil, daß Perchlorate und Perchlorat-Hydrate Aluminium und dessen Legierungen nicht angreifen, so daß entsprechende Behälter und dergleichen kostengünstig aus Aluminiumwerkstoffen hergestellt werden können.

Aufgrund der bisherigen Untersuchungen lassen sich die mit der Erfindung zur Verfügung gestellten Mischungen vorläufig in verschiedene Gruppen einteilen. Die wichtigste Gruppe wird aus solchen Mischungen gebildet, die zum überwiegenden molaren Anteil aus Lithiumperchlorat-Trihydrat bestehen, wobei diese Mischungen kongruent schmelzen und erstarren, und sich im großen und ganzen, abgesehen von einer jeweils anderen Schmelztemperatur, vom Verhalten des reinen Lithiumperchlorat-Trihydrats praktisch nicht unterscheiden, also auch bei einer entsprechend eutektischen Mischungszusammensetzung einheitlich bei einer festen Temperatur den Phasenübergang vollziehen. Dabei ist ihnen gemeinsam, daß sie ohne Unterkühlung vom flüssigen in den festen Zustand zurückkehren.

Zu dieser Gruppe gehört eine eutektische Mischung aus 79 mol Lithiumperchlorat-Trihydrat mit 21 mol seines eigenen Monohydrats, welches bei 91,9 °C schmilzt und sich in seiner Schmelzenthalpie kaum von der des reinen Trihydrats unterscheidet.

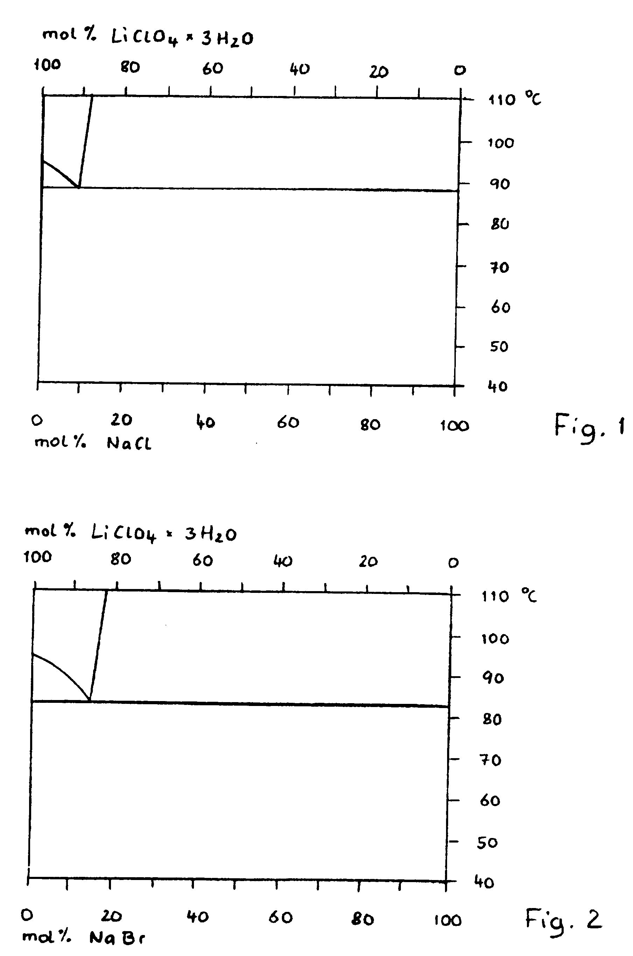

Ferner sind eutektische Mischungen zwischen Lithiumperchlorat-Trihydrat und 9 mol% Natriumchlorid bzw. 14 mol% Natriunbromid zu dieser Gruppe gehörig (siehe Fig.1 und Fig.2), deren Schmelztemperaturen zu 87,7 °C bzw. 82,5 °C ermittelt wurden, und deren Schmelzenthalpien ebenfalls erstaunlich hoch liegen.

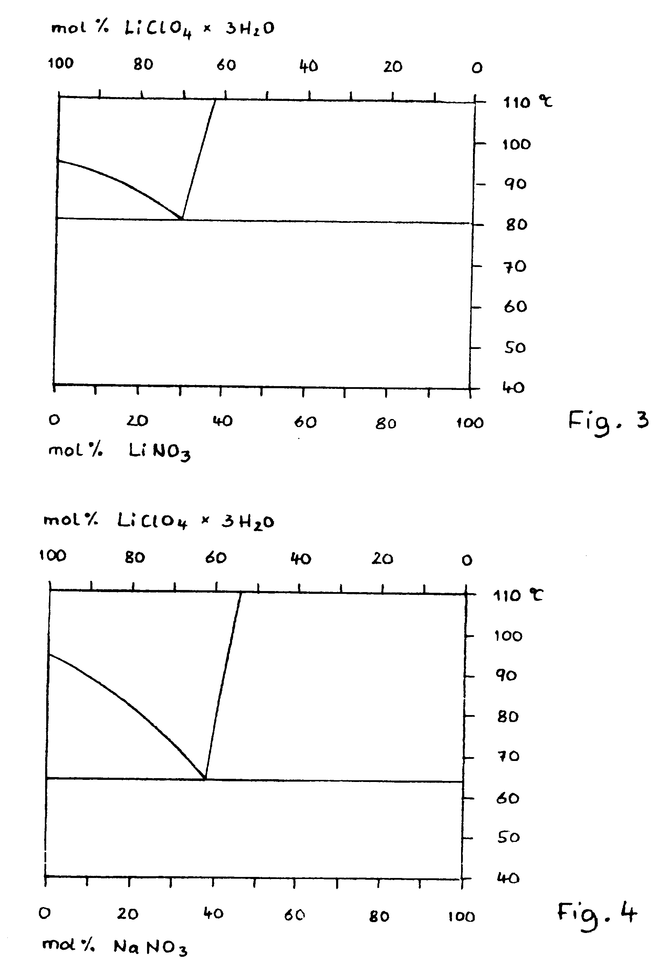

Zur gleichen Gruppe dürften auch Mischungen aus Lithiumperchlorat-Trihydrat und Kaliumperchlorat, bzw. Magnesiumperchlorat-Hexahydrat, Magnesiumchlorid-Hexahydrat, Lithiumnitrat und Natriumnitrat gehören. Im Falle der Zumischung des Lithiumnitrats ist besonders erstaunlich, daß dieses ohne Kristallwasser bei etwa 80,6 °C ein Eutektikum mit dem Lithiumperchlorat eingeht (siehe Fig.3), obwohl es normalerweise selbst bei 29,9 °C als Trihydrat schmilzt. Auch bei diesem Eutektikum ist die volumenspezifische Schmelzenthalpie trotz der Schmelzpunkterniedrigung mit der des reinen Lithiumperchlorat-Trihydrats praktisch identisch.

Eine zweite Gruppe wird von jenen Mischungen gebildet, welche ebenfalls zum größeren Anteil aus Lithiumperchlorat-Trihydrat bestehen, bei den bisherigen Untersuchungen jedoch ein etwas indifferentes Bild gezeigt haben. Dabei handelt es sich um Zumischungen aus Kaliumchlorid, bzw. Lithiumchlorid-Monohydrat. In beiden Fällen sind die mit der DSC-Anlage gewonnenen Kurven nicht gut reproduzierbar und ständigen Veränderungen unterworfen. Es wird vermutet, daß im Falle der Zumischung aus Lithiumchlorid-Monohydrat aufgrund der extremen Hygroskopie der Substanz ein Wasserüberschuß der Mischung besteht, welcher Auslöser für ein indifferentes Schmelzverhalten sein könnte. Obwohl diese Mischung möglicherweise inkongruent schmilzt, scheint das von ihr gebildete quasibinäre System zumindest einen invarianten Schmelzpunkt bei etwa 73,0 °C zu besitzen. Trotz der bislang nicht exakt bestimmten molaren Zusammensetzung konnte für diese Mischung ein in Bezug auf das Gewicht praktisch mit dem reinen Lithiumperchlorat-Trihydrat identischer Wert für die Schmelzenthalpie ermittelt werden.

In die dritte Gruppe sind solche Mischungen einzuordnen, welche einen erheblichen molaren Anteil an Lithiumperchlorat-Trihydrat besitzen, jedoch aufgrund der zugemischten Komponente inkongruent bzw. peritektisch schmelzen, wobei einige dieser Mischungen dazu tendieren, das vom Anmelder gefundene und "trockenes Schmelzen" (siehe EP-Anmeldung 90730008/EP-A-0402 304 genannte Verhalten zu zeigen. Hierzu sind vor allem Zumischungen aus Lithiumhydroxid-Monohydrat, bzw. Strontiumhydroxid-Octahydrat zu zählen. Bei den Untersuchungen in der DSC-Anlage wurde für eine solche quasieutektitische Mischung aus 2 mol Lithiumperchlorat-Trihydrat und 1 mol Strontiumhydroxid-Octahydrat eine Schmelztemperatur von 40,0 °C und eine Schmelzenthalpie von ca. 300 J/g gefunden. Für eine Mischung aus 38 mol% Lithiumperchlorat-Trihydrat und 62 mol% Lithiumhydroxid-Monohydrat wurde die Schmelztemperatur bei 66,8 °C und die Schmelzenthalpie zu 288 J/g bestimmt.

Die genannte Mischung des Lithiumperchlorat-Trihydrats mit Strontiumhydroxid-Octahydrat ist z.B. für den Einsatz im Bereich der Gebäudeheizung benutzbar, um z.B. Solarenergie zu speichern. Bei der Bemessung der entsprechenden Behältnisse ist bei dieser Mischung ein leicht vergrößerter Ausdehnungsraum z.B. mittels elastischer Wände zu berücksichtigen, da sie nach dem Erstarren noch eine leichte Volumenzunahme zeigt.

Der nächsten Gruppe gehören solche Mischungen an, die aus einem kleineren Anteil eines Perchlorat-Hydrats und einem überwiegenden Restanteil z.B. aus Chloriden, bzw. Bromiden, Hydroxiden oder Nitraten, bzw. des jeweils entsprechenden Hydrats, der Elemente Lithium, Natrium, Kalium, Magnesium, Calcium, Strontium oder Barium bestehen.

Eine weitere Gruppe wird im wesentlichen von denjenigen Mischungen gebildet, welche aus einem meist kleineren Anteil an Kaliumperchlorat bestehen, wobei der Restanteil aus ausgewählten Chloriden, bzw. Bromiden, Hydroxiden oder Nitraten, bzw. deren jeweiligen Hydraten, der Elemente Lithium, Natrium, Kalium, Magnesium, Calcium, Strontium oder Barium besteht.

Schließlich besteht gemäß der Erfindung eine separate Gruppe von solchen Mischungen, die zu einem Anteil aus mindestens einem Perchlorat bzw. Perchlorat-Hydrat und einem weiteren Anteil aus einer organischen Substanz gemischt sind, wobei die organische Substanz aus jener Gruppe ausgewählt ist, welche durch Perchlorate nicht oxydierbar ist. Die Mischungen dieser Gruppe zeichnen sich durch eine ausgeprägte Unterkühlungsneigung aus. Sie sind daher vorteilhaft für solche Anwendungen vorgesehen, wo Wärme z.B. auf Anforderung (durch gezieltes Auslösen der Kristallisation) abrufbar sein soll. Typische Beispiele aus dieser Gruppe sind Mischungen aus Lithiumperchlorat-Trihydrat und Mannit oder Pentaerythrit.

Aus den verschiedenen Gruppen erscheint die Verwendung der höherschmelzenden Mischungen mit Schmelztemperaturen zwischen ungefähr 70 und 92 °C vorteilhaft z.B. für eine Nachtstrom-Speicherheizung, während solche mit Schmelztemperaturen zwischen etwa 40 und 70 °C in Verbindung mit Solarkollektoren sinnvoll erscheinen.

Vorteilhaft sind diese Mischungen auch in Latentwärmesenken für Hitzeschutzsysteme zum Zwecke des thermischen Schutzes von temperaturempfindlicher Meßelektronik, z.B. in Durchlauföfen oder in Bohrlochsonden für die geophysikalische Erkundung von Tiefbohrungen einsetzbar.

Nach weiterer Erfindung werden aus den oben genannten Mischungen jene mit einer Schmelztemperatur zwischen 60 und 80 °C für die Verwendung in Vorwärmgeräten in Kraftfahrzeugen vorgeschlagen. Hier geht es darum, einen Latentwärmespeicher während der Laufphase des Motors mittels des Motorkühlwassers zu laden und diese Wärmemenge mit möglichst geringen Verlusten über mehrere Tage zu speichern, um beim Kaltstart entweder ein sofortiges Arbeiten der Wagenheizung zu erlauben, oder die Kaltstartphase des Motors abzukürzen, um Verschleiß und Emissionen zu reduzieren. Derartige Geräte befinden sich zur Zeit in der Entwicklung, wobei in Prototypen momentan das Latentwärmespeichermittel Bariumhydroxid-Octahydrat versuchsweise eingesetzt wird. Bariumhydroxid-Octahydrat hat die Nachteile, daß es sehr giftig ist und mit seiner Schmelz temperatur von 78 °C etwas über der als optimal angesehenen Temperatur von etwa 70 °C liegt. Besonders schwerwiegend ist jedoch, daß Bariumhydroxid-Octahydrat wie alle Alkalimetallhydroxide mit Aluminium und dessen Legierungen turbulent unter Entstehung von Wärme und Spaltgasen reagiert, wobei Bauteile aus den genannten Leichtmetallen in kurzer Zeit zerstört werden. Da in modernen Kraftfahrzeugen nicht nur Kühler, sondern zum Teil auch die Zylinderköpfe und Motorblöcke aus Aluminium bzw. Aluminiumlegierungen hergestellt sind, würden derartige Baugruppen durch den Austritt von Bariumhydroxid-Octahydrat in den Kühlwasserkreislauf im Falle eines Lecks des Speicherbehälters Schaden nehmen. Eine derartige Gefährdung ist nach der Erfindung durch die Verwendung aluminiumverträglicher Mischungen auf der Basis von Perchloraten bzw. Perchlorat-Hydraten beseitigt. Allerdings sind für derartige Mischungen vergleichsweise höhere Kosten einzukalkulieren.

Mit der Erfindung werden hier ferner verschiedene Möglichkeiten eröffnet, bestimmte Mischungen über- oder untereutektisch zu verwenden, um statt eines festen Schmelzpunktes einen Schmelzintervall festzulegen. Als Beispiel für eine derartige Anpassung kann eine Mischung aus Lithiumperchlorat-Trihydrat und Natriumnitrat genannt werden, welche bei einer molaren Zusammensetzung von 62 zu 38 eutektisch bei 64,0 °C schmilzt (siehe Fig.4). Durch Vermindern des Anteils an Natriumnitrat wird ein zu höheren Temperaturen hin sich ausdehnender Schmelzbereich gebildet, welcher durch Festlegung des Mengenverhältnisses genau bestimmbar ist. Dadurch ist für das genannte Anwendungsbeispiel der Schmelztemperaturbereich des Latentwärmespeichermittels exakt an die Temperaturverhältnisse im Kühlwasserkreislauf verschiedener Motortypen (z.B. Diesel oder Benziner) anpaßbar.

Aus der großen Zahl der mit der Erfindung zur Verfügung gestellten Mischungen erscheint z.B. für die Verwendung im Kraftfahrzeug noch eine Mischung zwischen Strontiumperchlorat und Strontiumhydroxid-Octahydrat interessant, weil diese einen recht günstigen Schmelzpunkt von 71,2 °C besitzt.

Auch für die Aufgabe, für den Fall der Verwendung von Bariumhydroxid-Octahydrat als Latentwärmespeichermittel im Kraftfahrzeug dessen Schmelztemperatur herabzusetzen, werden mit der Erfindung verschiedene Lösungen angeboten, welche in der Zumischung von Perchloraten bzw. Perchlorat-Hydraten bestehen. Als Beispiel für eine derartige Anpassung soll hier eine Mischung aus 86 mol Bariumhydroxid-Octahydrat und 14 mol Kaliumperchlorat zitiert werden, welche eine Schmelztemperatur von 76,5 °C besitzt und deren volumenspezifische Schmelzenthalpie sogar geringfügig höher als die des reinen Bariumhydroxid-Octahydrats ist.

Als Überblick zur Erfindung ist eine Tabelle beigefügt, in welcher im oberen Teil Daten verschiedener reiner Substanzen aufgelistet sind. Im unteren Teil sind ausgewählte Beispiele erfindungsgemäßer Mischungen zusammengestellt. Dazu wurden der Einfachheit halber die im oberen Teil in Klammern gesetzten Abkürzungen verwendet. Die jeweiligen molaren Mischungsverhältnisse werden angegeben, soweit sie bereits bestimmt wurden. Im Falle nahezu eutektischer Mischungsverhältnisse ist zusätzlich ein "E" in Klammern angefügt. Nach der Temperaturangabe des jeweils ermittelten Schmelzpunktes wird ferner ein in Klammern gesetzter Hinweis auf das beobachtete Schmelzverhalten gegeben. Die verwendeten Abkürzungen bzw. das Symbol sind am Fuß der Tabelle erläutert.

In den Zeichnungsfiguren sind als Beispiel vier aus DSC-Schmelzkurven gewonnene Phasendiagramme folgender quasibinärer Systeme dargestellt:
Fig.1 Lithiumperchlorat-Trihydrat / Natriumchlorid
Fig.2 Lithiumperchlorat-Trihydrat / Natriumbromid
Fig.3 Lithiumperchlorat-Trihydrat / Lithiumnitrat
Fig.4. Lithiumperchlorat-Trihydrat / Natriumnitrat

Es ist klar zu erkennen, daß sich diese Systeme eutektisch verhalten, wobei naturgemäß der zur jeweils wasserfreien Komponente verlaufende Kurvenast sehr steil ist.

Insgesamt wird mit der Erfindung eine Familie an Speicherhydrat-Mischungen zur Verfügung gestellt, welche die Auswahl einer Vielzahl von Schmelzpunkten im Brauchwasserbereich ermöglicht, dabei sehr hohe volumenspezifische Schmelzenthalpien besitzt und zyklenfest ist. Im Hinblick auf ihre physiologische Bedenklichkeit erscheint sie verhältnismäßig akzeptabel. Die Hauptmischungsbestandteile sind in großen Mengen zu günstigen Kosten verfügbar. Die meisten der vorgeschlagenen Mischungen besitzen keine bzw. lediglich eine geringe Entmischungsneigung. Das Erstarrungsgefüge ist vorteilhaft feinkristallin, die Volumenänderung beim Schmelzen minimal. Ein chemischer Angriff gegen Aluminium und dessen Legierungen ist entweder überhaupt nicht vorhanden bzw. bei einigen der vorgeschlagenen Mischungen relativ gering. Der Dampfdruck einiger dieser Mischungen ist deutlich erniedrigt. Damit sind die Voraussetzungen für eine verbesserte Leistung und verbesserte Eigenschaften von Latentwärmespeichern geschaffen.

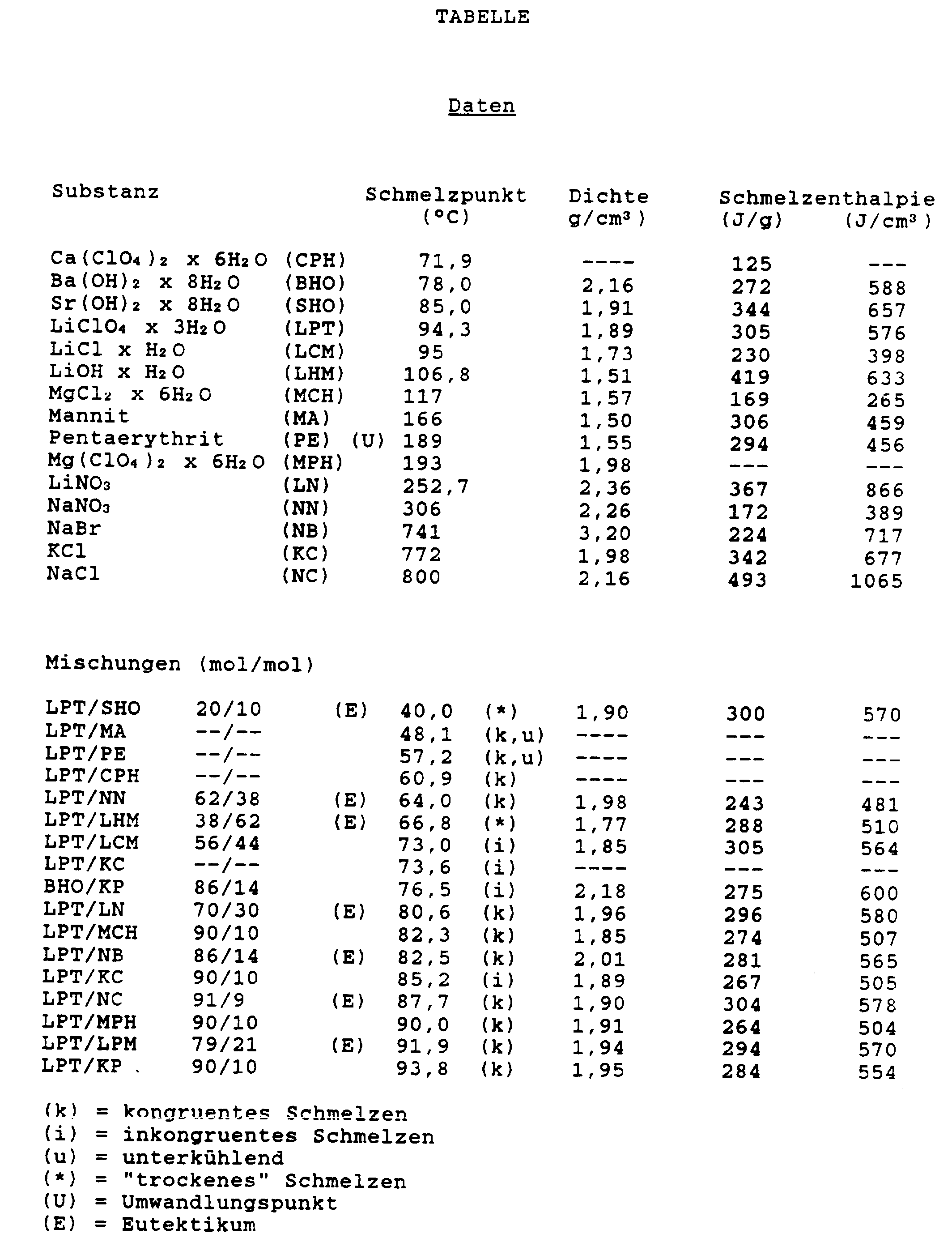

## Patentansprüche

1. Verwendung eines Salzgemisches zur Speicherung latenter thermischer Energie, wobei von dieser Salzmischung beim Phasenübergang fest-flüssig Wärmeenergie aufgenommen und/oder beim Phasenübergang flüssig-fest Wärmeenergie abgegeben wird, dadurch gekennzeichnet, daß dieses Salzgemisch mit einem Molanteil zwischen 5% und 95% aus einem oder mehreren Perchloraten bzw. Perchlorat-Hydraten besteht.

2. Verwendung eines Salzgemisches gemäß Anspruch 1, dadurch gekennzeichnet, daß die Perchlorate bzw. Perchlorat-Hydrate aus jenen Gruppen ausgewählt sind, welche die Elemente Lithium, Natrium, Kalium, Magnesium, Calcium, Strontium bzw. Barium enthalten.

3. Verwendung eines Salzgemisches gemäß Anspruch 1, dadurch gekennzeichnet, daß das Perchlorat Kaliumperchlorat bzw. das Perchlorat-Hydrat Lithiumperchlorat-Trihydrat ist.

4. Verwendung einer Salzmischung nach einem oder mehreren der vorgenannten Ansprüche, dadurch gekennzeichnet, daß die weiteren zugemischten Salze aus der Gruppe der Chloride bzw. Chlorid-Hydrate ausgewählt sind.

5. Verwendung einer Salzmischung nach Anspruch 4, dadurch gekennzeichnet, daß die Chloride bzw. Chlorid-Hydrate Lithiumchlorid oder Lithiumchlorid-Monohydrat, bzw. Kaliumchlorid und/oder vorzugsweise Natriumchlorid sind.

6. Verwendung einer Salzmischung nach einem oder mehreren der vorgenannten Ansprüche, dadurch gekennzeichnet, daß die weiteren zugemischten Salze aus der Gruppe der Nitrate bzw. Nitrat-Hydrate ausgewählt sind.

7. Verwendung einer Salzmischung nach Anspruch 6, dadurch gekennzeichnet, daß die Nitrate bzw. Nitrat-Hydrate vorzugsweise Lithiumnitrat oder Lithiumnitrat-Trihydrat, Natriumnitrat, oder Kaliumnitrat sind.

8. Verwendung einer Salzmischung nach einem oder mehreren der vorgenannten Ansprüche, dadurch gekennzeichnet, daß die weiteren zugemischten Salze aus der Gruppe der Hydroxide bzw. Hydroxid-Hydrate ausgewählt sind.

9. Verwendung einer Salzmischung gemäß Anspruch 8, dadurch gekennzeichnet, daß die Hydroxid-Hydrate vorzugsweise Lithiumhydroxid-Monohydrat, Natriumhydroxid-Monohydrat, Kaliumhydroxid-Monohydrat, Strontiumhydroxid-Octahydrat oder Bariumhydroxid-Octahydrat sind.

10. Verwendung einer Salzmischung nach einem oder mehreren der vorgenannten Ansprüche, das das zweite bzw. mindestens ein weiteres der zugemischten Salze ebenfalls ein Perchlorat bzw. Perchlorat-Hydrat ist.

11. Verwendung einer Salzmischung nach einem oder mehreren der vorgenannten Ansprüche, dadurch gekennzeichnet, daß eine geringe Überschußmenge an Wasser zugesetzt ist.

12. Verwendung einer Salzmischung nach einem oder mehreren der vorgenannten Ansprüche, dadurch gekennzeichnet, daß mindestens eine organische Substanz zugemischt ist, welche aus jener Gruppe ausgewählt ist, welche durch Perchlorate nicht oxydierbar ist.

13. Verwendung einer Mischung gemäß vorstehendem Anspruch, dadurch gekennzeichnet, daß die organische Substanz aus den sogenannten Zuckeralkoholen ausgewählt ist.

14. Latentwärmespeicher bzw. Latentwärmespeicherelement, bestehend aus einem verschließbaren Behältnis, welches mindestens teilweise mit einer anorganischen Salzmischung zur Speicherung latenter thermischer Energie befüllt ist, wobei diese Mischung durch Anlegen einer höheren Temperatur entweder schmelzbar ist und durch Anlegen einer niedrigeren Temperatur wieder erstarrt, oder wobei ein in dieser Mischung enthaltenes Hydrat durch Anlegen einer höheren Temperatur Kristallwasser abspaltet und durch Anlegen einer niedrigeren Temperatur dieses abgespaltene Kristallwasser wieder aufnimmt, wobei entweder durch den Phasenübergang fest-flüssig oder durch die Abspaltung von Kristallwasser Wärmeenergie aufgenommen und/oder entweder durch den Phasenübergang flüssig-fest oder durch die Wiederanlagerung von Kristallwasser Wärmeenergie abgegeben wird, dadurch gekennzeichnet, daß zur Speicherung latenter thermischer Energie eine Mischung gemäß den Ansprüchen 1 bis 13 verwendet wird.

15. Durch das Motorkühlwasser ladbarer Latentwärmespeicher für Kraftfahrzeuge, mit einem Strömungsweg für das Motorkühlwasser und mindestens einem davon durch eine Wärmetauscherfläche getrennten Bereich für das Speichermedium, dadurch gekennzeichnet, daß als Speichermedium eine Mischung gemäß den Ansprüchen 1 bis 13 verwendet wird, deren Schmelztemperatur im Bereich zwischen 55 und 85 °C, vorzugsweise im Bereich zwischen 60 und 80 °C ausgewählt ist.

16. Hitzeschutzsystem für den thermischen Schutz einer meßtechnischen Baugruppe z.B. aus Meßelektronik und/oder Sensoren, bestehend aus einem thermisch isolierenden Behälter, einem Hitzeschild oder Dewargefäß, sowie einer oder mehrerer darin eingebrachter Latentwärmesenken, dadurch gekennzeichnet, daß die Latentwärmesenken mit einer Speicherhydrat-Mischung gemäß den Ansprüchen 1 bis 13 befüllt sind.

## Claims

1. Use of a salt mixture for storing latent thermal energy, this salt mixture absorbing heat energy during the solid-liquid phase transition and/or giving off heat energy during the liquid-solid phase transition, characterised in that this salt mixture comprises one or more perchlorates or perchlorate hydrates in a molar fraction of between 5% and 95%.

2. Use of a salt mixture according to Claim 1, characterised in that the perchlorates or perchlorate hydrates are selected from those groups which contain the elements lithium, sodium, potassium, magnesium, calcium, strontium and barium.

3. Use of a salt mixture according to Claim 1, characterised in that the perchlorate is potassium perchlorate and/or the perchlorate hydrate is lithium perchlorate trihydrate.

4. Use of a salt mixture according to one or more of the preceding claims, characterised in that the further admixed salts are selected from the group of the chlorides or chloride hydrates.

5. Use of a salt mixture according to Claim 4, characterised in that the chlorides or chloride hydrates are lithium chloride or lithium chloride monohydrate, or potassium chloride and/or preferably sodium chloride.

6. Use of a salt mixture according to one or more of the preceding claims, characterised in that the further admixed salts are selected from the group of the nitrates or nitrate hydrates.

7. Use of a salt mixture according to Claim 6, characterised in that the nitrates or nitrate hydrates are preferably lithium nitrate or lithium nitrate trihydrate, sodium nitrate or potassium nitrate.

8. Use of a salt mixture according to one or more of the preceding claims, characterised in that the further admixed salts are selected from the group of the hydroxides or hydroxide hydrates.

9. Use of a salt mixture according to Claim 8, characterised in that the hydroxide hydrates are preferably lithium hydroxide monohydrate, sodium hydroxide monohydrate, potassium hydroxide monohydrate, strontium hydroxide octahydrate or barium hydroxide octahydrate.

10. Use of a salt mixture according to one or more of the preceding claims, characterised in that the second or at least one further salt of the admixed salts is also a perchlorate or a perchlorate hydrate.

11. Use of a salt mixture according to one or more of the preceding claims, characterised in that a small excess amount of water is added.

12. Use of a salt mixture according to one or more of the preceding claims, characterised in that at least one organic substance is admixed which is chosen from that group which cannot be oxidised by perchlorates.

13. Use of a mixture according to the above claim, characterised in that the organic substance is selected from the so-called sugar alcohols.

14. Phase change material device or phase change material device element, comprising a sealable container which is charged at least partially with an inorganic salt mixture for storing latent thermal energy, this mixture either being meltable by application of a higher temperature and resolidifying by applying a lower temperature, or a hydrate contained in this mixture eliminating water of crystallisation by application of a higher temperature and reabsorbing this eliminated water of crystallisation by application of a lower temperature, heat energy being absorbed either by the solid-liquid phase transition or by the elimination of water of crystallisation, and/or heat energy being given off either by the liquid-solid phase transition or by the readdition of water of crystallisation, characterised in that a mixture according to Claims 1 to 13 is used for storing latent thermal energy.

15. Phase change material device for motor vehicles, chargeable by the engine cooling water and having a flowpath for the engine cooling water and at least one storage medium area separated therefrom by a heat exchange surface, characterised in that the storage medium used is a mixture according to Claims 1 to 13 whose melting point is selected in the range between 55 and 85°C, preferably in the range between 60 and 80°C.

16. Heat protection system for the thermal protection of a measurement-function subassembly of, for example, measurement electronics and/or sensors, comprising a thermally insulating container, a heat shield or Dewar vessel, and one or more latent heat sinks incorporated therein, characterised in that the latent heat sinks are filled with a storage hydrate mixture according to Claims. 1 to 13.

## Revendications

1. Utilisation d'un mélange salin pour l'accumulation d'énergie thermique latente, de l'énergie thermique absorbée par ce mélange salin lors de la transition de phase solide-liquide et/ou de l'énergie thermique étant dégagée lors de la transition de phase liquide-solide, **caractérisée en ce** que ce mélange salin avec un taux molaire entre 5% et 95% est constitué par un ou plusieurs perchlorates ou hydrates de perchlorate.

2. Utilisation d'un mélange salin selon la revendication 1, **caractérisée en ce** que les perchlorates ou hydrates de perchlorate sont sélectionnés dans les groupes qui contiennent les éléments lithium, sodium, potassium, magnésium, calcium, strontium ou barium.

3. Utilisation d'un mélange salin selon la revendication 1, **caractérisée en ce** que le perchlorate est le perchlorate de potassium ou l'hydrate de perchlorate le trihydrate de perchlorate de lithium.

4. Utilisation d'un mélange salin selon l'une ou plusieurs des revendications précédentes, **caractérisée en ce** que les autres sels mélangés sont sélectionnés dans le groupe des chlorures ou des hydrates de chlorure.

5. Utilisation d'un mélange salin selon la revendication 4, **caractérisée en ce** que les chlorures ou hydrates de chlorure sont le chlorure de lithium ou le monohydrate de chlorure de lithium ou le chlorure de potassium et/ou de préférence le chlorure de sodium.

6. Utilisation d'un mélange salin selon l'une ou plusieurs des revendications précédentes, **caractérisée en ce** que les autres sels mélangés sont sélectionnés dans le groupe des nitrates ou des hydrates de nitrate.

7. Utilisation d'un mélange salin selon la revendication 6, **caractérisée en ce** que les nitrates ou hydrates de nitrates sont de préférence le nitrate de lithium ou le trihydrate de nitrate de lithium, le nitrate de sodium ou le nitrate de potassium.

8. Utilisation d'un mélange salin selon une ou plusieurs des revendications précédentes, **caractérisée en ce** que les autres sels mélangés sont sélectionnés dans le groupe des hydroxydes ou des hydrates d'hydroxydes.

9. Utilisation d'un mélange salin selon la revendication 8, **caractérisée en ce** que les hydrates d'hydroxydes sont de préférence le monohydrate d'hydroxyde de lithium, le monohydrate d'hydroxyde de sodium, le monohydrate d'hydroxyde de potassium, l'octahydrate d'hydroxyde de strontium ou l'octahydrate d'hydroxyde de barium.

10. Utilisation d'un mélange salin selon l'une ou plusieurs des revendications précédentes, **caractérisée en ce** que le second ou au moins un autre des sels mélangés est également un perchlorate ou un hydrate de perchlorate.

11. Utilisation d'un mélange salin selon l'une ou plusieurs des revendications précédentes, **caractérisée en ce** qu'une faible quantité en surplus d'eau est ajoutée.

12. Utilisation d'un mélange salin selon l'une ou plusieurs des revendications précédentes, **caractérisée en ce** qu'au moins une substance organique est additionnée et mélangée qui est sélectionnée dans le groupe qui n'est pas oxydable par les perchlorates.

13. Utilisation d'un mélange selon la revendication précédente, **caractérisée en ce** que la substance organique est sélectionnée parmi ce qu'il est convenu d'appeler les alcools de sucre.

14. Accumulateur de chaleur latente ou élément accumulateur de chaleur latente, constitué par un récipient qui peut être fermé qui est rempli au moins partiellement avec un mélange salin anorganique pour l'accumulation d'énergie thermique latente, ce mélange pouvant soit être fondu en appliquant une température plus élevée et se solidifiant à nouveau en appliquant une température plus basse, ou un hydrate contenu dans ce mélange éliminant de l'eau de cristallisation en appliquant une température plus élevée et absorbant à nouveau cette eau de cristallisation éliminée en appliquant une température plus basse, de l'énergie thermique étant absorbée soit par la transition de phase solide-liquide soit par l'élimination d'eau de cristallisation, et/ou de l'énergie thermique étant dégagée soit par la transition de phase liquide-solide soit par la nouvelle addition de l'eau de cristallisation, **caractérisé en ce** que, pour l'accumulation d'énergie thermique latente, on utilise un mélange selon les revendications 1 à 13.

15. Accumulateur de chaleur latente pour véhicules automobiles pouvant être chargé par l'eau de refroidissement du moteur, avec une voie d'écoulement pour l'eau de refroidissement du moteur et au moins une zone séparée de celle-ci par une surface d'échange thermique pour l'agent accumulateur, **caractérisé en ce** qu'un mélange selon les revendications 1 à 13 est utilisé comme agent accumulateur, mélange dont la température de fusion est sélectionnée dans la plage entre 55 et 85° C, de préférence dans la plage entre 60 et 80° C.

16. Système de protection contre la chaleur pour la protection thermique d'un ensemble de technique de mesure, par exemple constitué par l'électronique de mesure et/ou les détecteurs, constitué par un récipient isolant thermiquement, un bouclier thermique ou vase Dewar, ainsi qu'un ou plusieurs puits de chaleur intégrés, **caractérisé en ce** que les puits de chaleur latente sont remplis avec un mélange d'hydrate accumulateur selon les revendications 1 à 13.
